# EUROPEAN PATENT APPLICATION

(11) **EP 4 491 022 A1**
(43) Date of publication of application: **15.01.2025**
(21) Application number: 23386105.3
(22) Date of filing: 26.10.2023
(51) Int. Cl.: A01N 37/02, A01P 7/02, A01K 51/00

(54) **PREPARATION OF OXALIC ACID EMULSION THAT CAN ALSO PROTECT BEE COLONIES**

(30) Priority: 12.07.2023 GR 20230100572
(71) Applicant: Zafeiropoulos, Stefanos, 27053 Lechaina (GR)
(72) Inventor: The designation of the inventor has not yet been filed

(57) **Abstract**

This invention is an innovative organic preparation in the form of an emulsion, which is placed on sponge towel strips in the frames of beekeeping hives in order to limit and suppress a disease of the swarms, which is called baroic acariasis, and the swarm's sanitization, due to its composition which allows the most effective transmission of its active substance.

This invention contains dehydrate oxalic acid of high purity as an active substance, which has significant acaricidical properties and also contains secondary substances, that significantly support and enhance its action in various ways.

## Description

Innovative preparation with organic active substance in the form of an emulsion, which is placed on sponge towel strips in the frames of beekeeping hives in order to limit and suppress a disease of the swarms, which is called baroic acariasis, and the swarm's sanitization, due to its composition which allows the most effective transmission of its active substance.

Until today, oxalic acid is used in beekeeping as a substance combined with glycerin, whichis thick and nonvolatile liquid that solubilises and binds the oxalic acid in the absorbent strip materials that are soaked at any time, extending the duration of its acaricidal properties. However, this binding is not the most effective, because glycerin alone, combined with the respective strips of absorbent materials in various preparations, it is not able to extend the oxalic acid properties consistently for a long period of time and, as a result, the user is forced to buy additional substance oxalate strips fore bees' protection. In addition, glycerin, because of its hygroscopic property, absorbs the moisture developed inside the beekeeping hive, a phenomenon that is aggravated by the absorbent materials of the strips, as a result of which the active substance is further weakened. All this prove that the protection of the beekeeping hive from the baroic acariasis is inadequate with conventional methods. On another level, due to the bees' strong self-cleaning instinct, the strips are destroyed and removed, such as cellulose ones and even those made of other conventional materials from the bees. As a result, their immediate change is required to keep their fitting in the beekeeping hive functional and effective. Finally, conventional materials, dipped in a mixture of oxalic acid and glycerin, usually have large, specific sizes and as a result they block the gaps of the beehive frames.

In our case, we have a product, which consists of strips of a special high-quality sponge towel in appropriate dimensions, which are dipped, under the appropriate temperature, in a homogeneous mixture of oxalic acid emulsion of a specific composition and then packed in vacuum conditions for maximum preservation. This invention contains dehydrate oxalic acid of high purity as an active substance, which has significant acaricidical properties and also contains secondary substances, that significantly support and enhance its action in various ways, which will be mentioned below.

During the first stage of preparation of the dipping mixture, the necessary materials for its preparation are gathered. The dipping mixture consists of vegetable glycerine at 40-50%, dehydrate oxalic acid at 20-30%, pharmaceutical petroleum jelly at 12-20%, sunflower oil at 7-12%, cetyl alcohol at 1-5%, glycerine monoester at 1-5%, Beautederm K10 at 1-5%, essential oil components at 0.1-5% and xanthan gum at 0.05-0.08%. These components are divided into three main categories according to their solubility and characteristics. The water-soluble components of the mixture, i.e. vegetable glycerin and dihydrate oxalic acid, are its aqueous phase. The oil-soluble components, i.e. the pharmaceutical petroleum jelly, the sunflower oil and the essential oil components, are the oily phase of the mixture. Finally, the emulsifiers and co-emulsifiers i.e. the cetyl alcohol, the glycerine monoester, the Beautederm K10 material and xanthan gum, are the substances that create the emulsion, i.e. the union of the two previous phases acting as connecting links and making a homogeneous new mixture.

After separating these materials into the three groups mentioned earlier, the process of preparing the homogeneous dipping mixture begins.

During the second stage, a homogeneous dipping mixture (emulsion) is created in a multi-tank homogenizer machine. This process includes five steps. In the first step, the aqueous phase materials are placed in order in the central tank of the homogenizer.

At first, the vegetable glycerin is placed in the above-mentioned machine and heated to a range between 40 to 50 °C degrees. After reaching this temperature, the dihydrate oxalic acid is added to the mixture and the mixture continues to be heated in a bain-marie vessel and to a range between 65 to 75 °C degrees and also stirred until the ingredients are completely homogenized and this forms the aqueous phase. In the second step, the oily materials are placed in a secondary tank together with the emulsifiers/co-emulsifiers in sequence. Specifically, they are initially placed together with sunflower oil, cetyl alcohol, glycerine monoester and Beautederm K10 material and heated to a range between 50 to 70 °C degrees until they are homogenized. Then, the medicated petroleum jelly, the xanthan gum and finally the essential oil components are added and the mixture is gradually heated in a bain-marie vessel to a range between 65 to 75 °C degrees, until they are completely homogenized and the oily phase is formed. During the third step, the oily phase is introduced with a constant flow into the central tank and is mixed with the aqueous phase under vigorous stirring in order to form a homogeneous oil-to-water (O/W) emulsion mixture, at a temperature of 70 to 75 °C degrees. During the fourth step, when the emulsion is completely homogenized, the cooling of the main tank begins so that the mixture's temperature will fall, reaching a range of degrees from 53 to 60 °C degrees. The purpose is the maximum stability of the emulsion and at the same time its maintenance in a fluid form, so that the dipping of the sponge towel strips is possible. In the fifth and final step, the sponge towel strips are dipped in the oxalic acid emulsion, inside the dipping tank. Afterwards, the process of their draining and packaging under vacuum conditions follows.

The main innovation of this invention compared to all the other preparations for the protection of the bee swarm is thatthe preparation in question is an emulsion and its particularly water-repellent properties indirectly are the result of this formulation and also the additional remaining substances have as result enacting as a "carrier" for the more efficient transmission substance, compared with another conventional common oxalic acid/glycerin mix, as well as in the reduction of side effects.

Due to the chemical bonds of the emulsion, this invention has the ability to bind the dehydrate oxalic acid more efficiently than conventional preparations and release it as slow as possible, thus keeping the pH of the sponge strips low for many days and greatly increasing their long-term effectiveness.

Due to the oily phase of this invention, it has greater water repellency, which means that, despite the high humidity of the bee hive as well as the strong glycerin hygroscopicity, the dipped strips are protected from the humidity of the environment due to the creation of a protective film made of the oils and other materials of this phase.

In this invention, the slow release of oxalic acid and its proper placement results in the least side effects in beekeeping contexts regarding the brood and the wax.

Due to the creamy and sticky texture of the emulsion, its substances act effectively as messengers, transporting and attaching the dissolved oxalic acid through contact to the body of the bees and then to the barroa_mites, which are the target.

Due to the combination of the mixture and the sponge type, in this invention the strips have much less damage from the bees of the swarm when placing them in the hive, which makes these strips more effective, since they are not destroyed by the intense bee self-cleaning instinct.

This invention can be easily placed in the frames of bee hives for professional use.

Due to the superabsorbency of this invention, the width of the strips can be reduced to final dimensions from 1.8 to 2 cm without the reduction of the amount of its mixture. The ratio of absorbency and surface area of the sponge strips allows less evaporation of the active substance and easier passage of the queens and the bees between the frames because the strips do not block the gaps compared to conventional oxalic acid strips_ones.

In this invention, mixing essential oil components and their adding to the mixture creates a more suitable climate and favors the mobility within the bee hive so that it improves the conditions for a more increased spread of oxalic acid and the subsequent elimination of the barroa mite, which is affected by the biochemical changes of its host, the bee, which in turn is affected by the smell of the constituent essential oils.

## Claims

1. Innovative preparation with organic active substance in the form of an emulsion, which is placed on sponge towel strips in the frames of beekeeping hives in order to limit and suppress a disease of the swarms, which is called baroic acariasis, and the swarm's sanitization,
due to its composition which allows the most effective transmission of its active substance.
1.1. Innovative preparation with organic active substance in the form of an emulsion, which is placed on sponge towel strips in the frames of beekeeping hives, according to Claim 1, and, due to its chemical bonds,
which is a unique characteristic of the preparation compared to any other ones, it has the ability to bind the dehydrate oxalic acid more effectively than he conventional preparations and release it as slowly as possible, thus keeping the pH of the sponge strips low for many days and greatly increasing their long-term effectiveness.
1.2. Innovative preparation with organic active substance in the form of an emulsion, which is placed on sponge towel strips in the frames of beekeeping hives, according to Claim 1, and due to its oily phase it has a greater water repellency, which means that, despite the high humidity of the bee hive as well as the intense hygroscopicity of glycerin, the dipped strips are protected from the environment's humidity.
1.3. Innovative preparation with organic active substance in the form of an emulsion, which is placed on sponge towel strips in the frames of beekeeping hives, according to Claim 1, and the slow release of oxalic acid and its proper placement results in the least side effects in beekeeping frames regarding the brood and the wax.
1.4. Innovative preparation with organic active substance in the form of an emulsion, which is placed on sponge towel strips in the frames of beekeeping hives, according to Claim 1,and whose substances, due to its creamy and sticky texture, act effectively as messengers, transporting and attaching the dissolved oxalic acid to the bees' body and then to the baroic mites' body, which is the target, through contact.
1.5. Innovative preparation with organic active substance in the form of an emulsion, which is placed on sponge towel strips in the frames of beekeeping hives, according to Claim 1, where the absorbent material of the specific sponge towel, combined with the nature of the emulsion mixture, results in an even more prolonged and stable release of oxalic acid.
1.6. Innovative preparation with organic active substance in the form of an emulsion, which is placed on sponge towel strips in the frames of beekeeping hives, according to Claim 1, and, because of its combination of the mixture and the kind of these strips,there is less wear of the strips by the bees of the swarm when placing them in the hive, which makes the strips more effective, since they are not quickly destroyed by the strong self-cleaning instinct of the bees.
1.7. Innovative preparation with organic active substance in the form of an emulsion, which is placed on sponge towel strips in the frames of beekeeping hives, according to Claim 1, and, due to the strips'
superabsorbency, their width can be reduced to final dimensions from 1.8 to 2 cm. without the reduction of the amount of the mixture they carry, and allow less evaporation of the active substance and easier passage for the queens and the bees between the frames, because the strips do not block their gaps.
1.8. Innovative preparation with organic active substance in the form of an emulsion, which is placed on sponge towel strips in the frames of beekeeping hives, according to Claim 1,where the ingredient mix of the essential oils and their addition to the specific mixture creates a more suitable climate and favors mobility within the beekeeping hive, in order toimprove the conditions for a more increased spread of oxalic acid and the subsequent elimination of the barroa mite.
